# EUROPÄISCHE PATENTSCHRIFT

(11) **EP 1 669 185 B1**
(45) Veröffentlichungstag und Bekanntmachung des Hinweises auf die Patenterteilung: **17.01.2007**
(21) Anmeldenummer: 05026812.7
(22) Anmeldetag: 08.12.2005
(51) Int. Cl.: B29C 47/90

(54) **Vorrichtung zur Unterstützung von extrudierten Kunststoffprofilen, insbesondere Rohren, in einer Extrusionslinie**
Apparatus for supporting extruded plastic profiles, in particular pipes, in an extrusion line
Dispositif pour supporter des profils en matière plastique extrudée, notamment tuyaux, dans une ligne d'extrusion

(30) Priorität: 10.12.2004 DE 102004059515
(43) Veröffentlichungstag der Anmeldung: 14.06.2006
(73) Patentinhaber: INOEX GmbH, 32547 Bad Oeynhausen (DE)
(72) Erfinder: Schmuhl, Jörg, Dr., 15711 Königs Wusterhausen (DE); Ludrikowski, Carlo, 32469 Petershagen (DE)
(74) Vertreter: Seewald, Jürgen

(56) Entgegenhaltungen:
- DE-A1- 2 062 378
- PATENT ABSTRACTS OF JAPAN Bd. 008, Nr. 276 (M-346), 18. Dezember 1984 (1984-12-18) & JP 59 146828 A (SUMITOMO KINZOKU KOGYO KK), 22. August 1984 (1984-08-22)

## Beschreibung

Die vorliegende Erfindung betrifft eine Vorrichtung zur Unterstützung von extrudierten Kunststoffprofilen gemäß dem Oberbegriff des Anspruchs 1. Eine Vorrichtung dieser Art ist beispielsweise aus der DE-A-2 062 378 oder aus der DE-A-198 43 340 bekannt.

Bei der Herstellung von Kunststoffprofilen, insbesondere von Kunststoffrohren, war es bis vor kurzem üblich, die gesamte Extrusionslinie für einen Dimensionswechsel, d.h. einen Wechsel des Querschnitts des extrudierten Kunststoffprofils, stillzusetzen. Anschließend mussten dann fast alle vom Dimensionswechsel betroffenen Komponenten der Extrusionslinie ausgetauscht werden. Das betraf insbesondere den Düsensatz des Rohrkopfes, die Kalibrierhülse und die Abdichtungen von Vakuumtank und Kühleinheiten. Des weiteren mussten andere Einrichtungen, wie der Raupenabzug, die Trenneinrichtung und Unterstützungseinrichtungen für das Extrudat auf die neue Dimension eingestellt werden. Die dadurch verursachten Stillstandzeiten der Extrusionslinie, sowie der hohe Aufwand beim Wechseln der einzelnen Ausrüstungsteile und die Verluste an Kunststoffmaterial waren auf der Kostenseite zu verkraften, solange mit großen Auftragslosen gearbeitet wurde. Unter den heutigen Produktionsbedingungen werden die Auftragslose aber immer kleiner, so dass die oben geschilderten Umstellungen beim Dimensionswechsel den erzielbaren Gewinn drücken.

Seit wenigen Jahren sind Ausrüstungen verfügbar, die einen Dimensionswechsel eines extrudierten Kunststoffprofils während des laufenden Produktionsprozesses ermöglichen. So ist z. B. in der DE 198 43 341 A1 ein verstellbarer Rohrkopf, in DE 198 43 340 C2 eine verstellbare Kalibrierhülse, in DE 202 07 037 U1 eine verstellbare Abdichtung und in DE 102 40 718 A1 ein verstellbarer Raupenabzug beschrieben.

Das extrudierte Kunststoffprofil muss in der Extrusionslinie bis zu seinem Aushärten unterstützt werden. Häufig werden zur Unterstützung Rollen eingesetzt, wie in der DE 198 43 341 A1 kurz beschrieben und in der WO 2004/106034 A1 offenbart. Eine derartige Rolle ist in Fig. A dargestellt. Sie dient der Unterstützung von extrudierten Rohren und ist in einem Gestell höhenverstellbar gelagert. Diese Höhenverstellung ist erforderlich, da die Mitte der extrudierten Rohre in der Extrusionslinie immer auf gleicher Höhe liegt, d.h., bei Rohren mit kleineren Durchmessern muss die Rolle nach oben verlagert, bei Rohren mit größeren Durchmessern nach unten verlagert werden. Die Oberfläche der Rolle ist konkav ausgeführt und kann an den Durchmesser des größten zu fahrenden Rohres angepasst sein, wie in Fig. A dargestellt ist. Dieses Rohr ist dann auf einem Teil seines Umfangs kontinuierlich umfasst, was sich positiv auf die Formstabilität des extrudierten Rohres auswirkt. Dies trifft aber nur auf diesen einen Rohrdurchmesser zu. Bei Rohren mit kleinerem Durchmesser liegt dann fast nur noch eine Punktunterstützung vor, wie ebenfalls in Fig. A angedeutet ist. Da diese aus dem Stand der Technik bekannte Rolle automatisch höhenverstellbar ist, ist sie für einen Dimensionswechsel bei laufender Produktion geeignet.

Eine andere, aus dem Stand der Technik bekannte Unterstützungsvorrichtung für extrudierte Kunststoffprofile ist in Fig. B ebenfalls wieder für ein Rohr dargestellt. Dabei handelt es sich um eine Platte, die eine an den Durchmesser des Rohres angepasste Aufnahme zur kontinuierlichen Teilumfassung des Rohres aufweist. Für jeden in der Extrusionslinie zu fahrenden Rohrdurchmesser existiert eine entsprechende Platte, d.h., bei einem Dimensionswechsel müssen die Platten entsprechend ausgewechselt werden. Diese Montage und Demontage ist kosten- und zeitintensiv. Vor allem dazu die Produktion mit den bekannten, nachteiligen Folgen unterbrochen werden.

Aufgabe der vorliegenden Erfindung ist es, eine Vorrichtung zur Unterstützung von extrudierten Kunststoffprofilen gattungsgemäßer Art zur Verfügung zu stellen, die eine einfache, stufenlose Anpassung an die in der Extrusionslinie gefahrenen Profildimensionen bei kontinuierlicher Teilumfassung des Profilumfangs gewährleistet und als Ausrüstung für einen Dimensionswechsel bei laufender Produktion geeignet ist.

Diese Aufgabe wird erfindungsgemäß mit einer Vorrichtung gelöst, die die Merkmale des Anspruchs 1 aufweist.

Vorteilhafte Weiterbildungen der erfindungsgemäßen Vorrichtung sind Gegenstand der abhängigen Ansprüche.

Die erfindungsgmäße Vorrichtung ermöglicht auf einfache Weise eine stufenlose Anpassung der Unterstützung an die jeweils produzierte Profilgröße, indem die Vorrichtung geschwenkt wird, wobei bei jeder Profilgröße eine Teilumfassung des Profils mit Linienberührung gewährleistet ist. Eine Vielzahl von Einzelplatten, wie bei dem aus Fig. B hervorgehenden Stand der Technik, ist nicht erforderlich. Darüber hinaus bietet die erfindungsgemäße Konstruktion auch die Möglichkeit einer Integration in eine Extrusionslinie mit Dimensionswechsel bei laufender Produktion.

Die Extrusionshöhe ist in einer Extrusionslinie durch die Höhenlage der Extrusionsdüse bestimmt. Sie bleibt auch bei einem Dimensionswechsel auf dem gleichen Höhenniveau. Wird die Produktion z. B. von einem Rohr größeren Durchmessers auf ein Rohr kleineren Durchmessers umgestellt, so muss die Vorrichtung zur Unterstützung entsprechend nach oben nachgeführt werden und umgekehrt, d.h., bei einem Dimensionswechsel muss die Schwenkachse der Vorrichtung entsprechend nach oben oder unten verstellt werden. Um dies zu vermeiden, die Schwenkachse also ortsfest lagern zu können, und die Vorrichtung damit weniger aufwendig und robuster zu gestalten, ist in sehr vorteilhafter Ausgestaltung der Erfindung die Schwenkachse auf der Mittelachse eines den Zylinderabschnitt enthaltenen Vollzylinders angeordnet, wobei die Tiefe der Rinne vom Ende mit der kleinsten Weite bis zum Ende mit der größten Weite stetig zunimmt. Die Sohle der Rinne ist somit exzentrisch zur Schwenkachse angeordnet, d. h., durch Verschwenken der Vorrichtung ändert sich der Abstand zwischen der Schwenkachse und der Sohle der Rinne, bezogen auf das zu unterstützende, extrudierte Profil. Die Sohle der Rinne verlagert sich somit in Anpassung an die jeweils gefertigte Profildimension nach oben oder unten. Gleichzeitig gewährleistet die sich in ihrer Tiefe ändernde Rinne eine möglichst große, linienförmige Teilumfassung des Profils. Bei Rohren ist damit z. B. eine optimale 180°-Umfassung möglich, was insbesondere bei großen Rohrdurchmessern sehr vorteilhaft ist. Die Verstellung der Vorrichtung kann z. B. über einen Motor erfolgen, so dass diese Vorrichtung für Extrusionslinien mit Dimensionswechsel bei laufendem Betrieb besonders geeignet ist.

Ebenso geeignet für derartige Extrusionslinien ist eine weitere Ausführungsform der vorliegenden Erfindung. Bei dieser Ausführungsform ist die Schwenkachse exzentrisch zur Mittelachse eines den Zylinderabschnitt enthaltenen Vollzylinders angeordnet und die Rinne hat über ihre gesamte Länge eine gleichbleibende Tiefe, wodurch ihre Sohle exzentrisch zur Schwenkachse verläuft. Auch hier kann die Schwenkachse ortsfest gelagert werden. Eine möglichst große Umschlingung des Profilumfangs ist aber nur bei kleinen Profilgrößen gegeben.

Um eine möglichst geringe Gleitreibung zwischen dem Zylinderabschnitt und dem extrudierten Profil zu haben, ist der Zylinderabschnitt, zumindest aber seine Kontaktoberfäche mit dem Profil, aus einem Material mit guten Gleiteigenschaften, z.B. PTFE, gefertigt.

Die Erfindung wird nachstehend anhand von Ausführungsbeispielen näher erläutert. In der dazugehörigen Zeichnung zeigt:
- Fig. 1: eine schematische Seitenansicht einer Rohrextrusionslinie,
- Fig. 2: verschiedenen Querschnitte durch eine Vorrichtung zur Unterstützung von extrudierten Rohren gemäß einer ersten Ausführungsform der vorliegenden Erfindung,
- Fig. 3: Seitenansichten der Vorrichtung gemäß Fig. 2,
- Fig. 4: verschiedene Querschnitte durch eine Vorrichtung zur Unterstützung von extrudierten Rohren gemäß einer zweiten Ausführungsform der vorliegenden Erfindung, und
- Fig. 5: Seitenansichten der Vorrichtung gemäß Fig. 4.

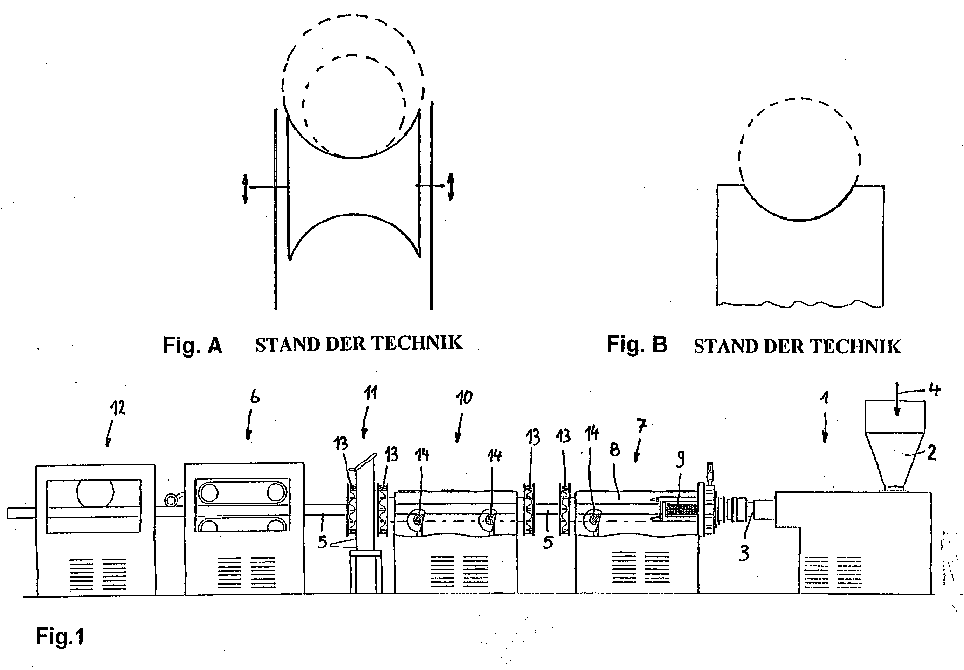

Die in Fig. 1 dargestellte Extrusionslinie umfasst eine Extrudereinheit 1 mit einem Aufgabetrichter 2, einer aus der Zeichnung nicht ersichtlichen Extruderschnecke und einem Rohrkopf 3.Über den Aufgabetrichter 2 wird ein thermoplastischer Kunststoff 4 in Granulat- oder Pulverform der Extrudereinheit 1 zugeführt. In dieser wird das Granulat bzw. Pulver erwärmt, geknetet und plastifiziert. Anschließend wird der Kunststoff 4 als formbare Masse durch die Extruderschnecke in den Rohrkopf 3 gefördert und dort durch einen ringförmigen Austrittsspalt gedrückt.

Nach dem Austritt aus dem Rohrkopf 3 wird das heiße, noch verformbare Rohr 5 mittels eines am Ende der Extrusionslinie angeordneten Raupenabzugs 6 durch eine Kalibrier- und Kühleinheit 7 gezogen, die einen Vakuumtank 8 mit einer an dessem Eingang angeordneten Kalibrierhülse 9 aufweist. Die Kalibrierhülse 9 ist stufenlos im Durchmesser einstellbar, so dass das extrudierte, noch formbare Rohr 5 auf den gewünschten das extrudierte, noch formbare Rohr 5 auf den gewünschten Durchmesser fixiert werden kann. Nach dem Verlassen der Kalibrier- und Kühleinheit 7 tritt das Rohr 5 in eine Kühlstrecke 10 ein, in der es auf Raumtemperatur abgekühlt wird. Zwischen der Kühlstrecke 10 und dem Raupenabzug 6 ist ein Ultraschallscanner 11 angeordnet, in dem der Durchmesser und die Wanddicke des extrudierten Rohres 5 erfasst werden. Dem Raupenabzug 6 schließt sich eine Trennsäge 12 an, in der das Rohr 5 abgelängt wird. Zur Aufrechterhaltung eines Unterdrucks in der Kalibrier- und Kühleinheit 7, der Kühlstrecke 10 und dem Ultraschallscanner 11 sind Dichtungen 13 vorgesehen, die das durchlaufende Rohr 5 abdichtend umschließen.

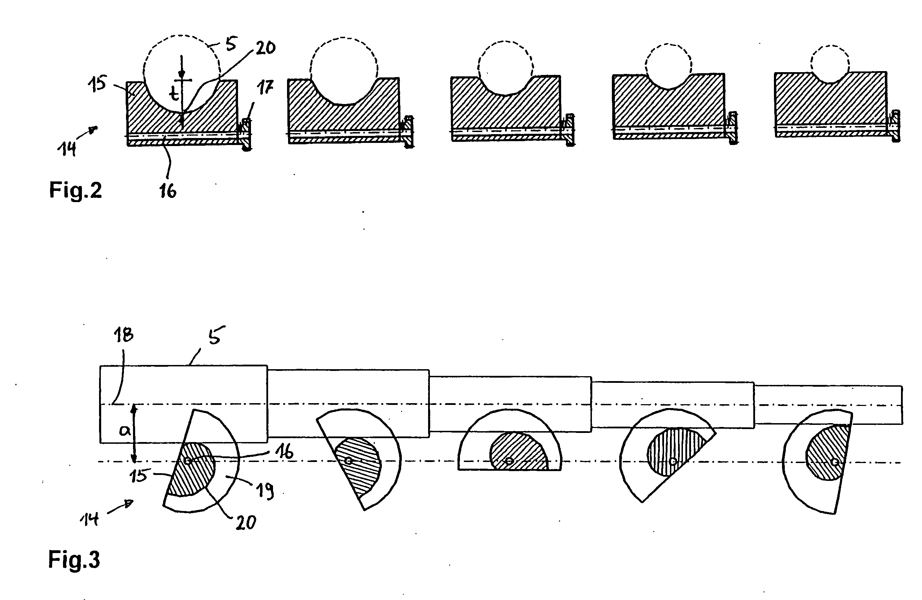

Da das extrudierte Rohr 5 erst nach Verlassen der Kühlstrecke 10 ausgehärtet, d. h. formstabil ist, muss es zuvor abgestützt werden, um ein Durchhängen und damit Deformieren zu vermeiden. Dazu sind in der Kühlstrecke 10 zwei und in der Kalibrier- und Kühleinheit 7 eine Rohrunterstützung 14 vorgesehen, deren Aufbau und Wirkungsweise nachstehend anhand der Fig. 2 - 5 beschrieben wird. In diesen Figuren sind die Bezugszeichen jeweils nur in eine der Darstellungen eingezeichnet. Für die anderen Darstellungen gelten die Bezugszeichen entsprechend.

Bei dem in den Fig. 2 und 3 gezeigten Ausführungsbeispiel besteht die Rohrunterstützung 14 aus einem Zylinderabschnitt 15, der etwas größer als ein Halbzylinder ist. Er ist um eine ortsfeste Schwenkachse 16 drehbar gelagert, die mit der Mittelachse eines den Zylinderabschnitt 15 enthaltenden Vollzylinders zusammenfällt. Der Antrieb der Rohrunterstützung 14 erfolgt über ein auf der Schwenkachse 16 drehfest sitzendes Zahnrad 17, welches über eine nicht dargestellte Motor-Getriebe-Einheit angetrieben wird. Die Schwenkachse 16 hat einen fixen Abstand a zur Extrusionshöhe 18, die in der Mitte des extrudierten Rohres 5 liegt.

Der Zylinderabschnitt 15 ist mit einer quer zur Schwenkachse 16, d.h., in Extrusionsrichtung ausgerichteten Rinne 19 ausgestattet, die sich in die Schnittfläche des Zylinderabschnitts 15 öffnet. Die Rinne 19 beginnt an ihrem einen Ende mit dem Radius des kleinsten herzustellenden Rohres 5 und endet an ihrem anderen Ende mit dem Radius des größten herzustellenden Rohres 5, wie am besten aus Fig. 2 hervorgeht. Dabei ist die Tiefe t der Rinne 19 so gewählt, dass bei allen zu produzierenden Rohrgrößen eine linienförmige Umschlingung des Rohrumfangs von annähernd 180° erreicht wird. Die Rinne 19 erweitert sich also von dem Ende mit dem kleinsten Rohrdurchmesser zum Ende mit dem größten Rohrdurchmesser konisch und nimmt in ihrer Tiefe t ständig zu. Aufgrund der Tiefenzunahme hat die Sohle 20 der Rinne 19 gegenüber der Schwenkachse 16 einen exzentrischen Verlauf, wie am besten aus Fig. 3 hervorgeht.

Durch entsprechendes Verschwenken der Rohrunterstützung 14 um ihre Schwenkachse 16 kann sie stufenlos auf jeden Durchmesser zwischen dem vorgegebenen kleinsten Durchmesser (Fig. 2 und 3, rechte Abb.) und dem vorgegebenen größten Durchmesser (Fig. 2 und 3, linke Abb.) eingestellt werden, wobei immer eine optimale, linienförmige Abstützung des produzierten Rohres 5 auf einen Umfangsbereich von annähernd 180° vorliegt. Die Rohrunterstützung 14 ist somit hervorragend für einen Einsatz in einer Extrusionslinie geeignet, die für einen Dimensionswechsel im laufenden Betrieb ausgerüstet ist, indem sie durch die Motor-Getriebe-Einheit z.B. über den in der Kalibrierhülse 9 eingestellten Rohrdurchmesser in Verbindung mit einer Streckenverfolgung auf die neu eingestellte Rohrdimension verschwenkt wird.

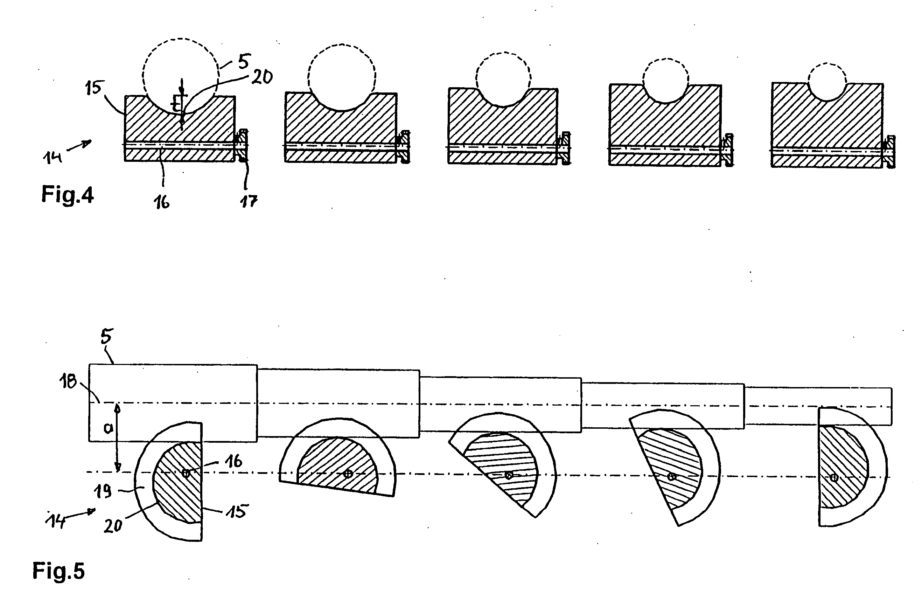

Bei dem Ausführungsbeispiel gemäß den Fig. 4 und 5 werden, sofern gleiche Bauteile verwendet werden, die Bezugszeichen vom ersten Ausführungsbeispiel übernommen. Die Bezugszeichen sind wiederum nur in die jeweils linke Darstellung der Fig. 4 und 5 eingezeichnet.

Der Schwenkantrieb der Rohrunterstützung 14 erfolgt wiederum über einen auf der Schwenkachse 16 drehfest sitzendes Zahnrad 17, welches über eine nicht dargestellte Motor-Getriebe-Einheit angetrieben wird. Die quer, also in Extrusionsrichtung, zur Schwenkachse 16 verlaufende Rinne 19 hat in diesem Ausführungsbeispiel über ihre gesamte Länge eine gleichbleibende Tiefe t. Da die Schwenkachse 16 exzentrisch zur Mittelachse eines den Zylinderabschnitt 15 enthaltenden Vollzylinders liegt, ist die Sohle 20 der Rinne 19 exzentrisch zur Schwenkachse 16 angeordnet, wie aus Fig. 5 hervorgeht.

Die Rinne 19 beginnt an ihrem einen Ende mit dem Durchmesser des kleinsten zu produzierenden Rohres 5 und endet an ihrem anderen Ende mit dem Durchmesser des größten zu produzierenden Rohres 5. Da die Rinne 19 eine gleichbleibende Tiefe t aufweist, kann eine optimale Umschlingung des Rohrprofils von ca. 180° nur bei dem Rohr mit dem kleinsten Durchmesser realisiert werden. Mit größer werdendem Durchmesser der produzierten Rohre 5 verringert sich der Umschlingungswinkel entsprechend. Auch diese Ausführungsform der Erfindung ist für einen Einsatz in einer für einen Dimensionswechsel bei laufender Produktion ausgestatteten Extrusionslininie geeignet.

## Patentansprüche

1. Vorrichtung zur Unterstützung von extrudierten Kunststoffprofilen, insbesondere Rohren, in einer Extrusionslinie mit einer an den Querschnitt des Profils angepassten Aufnahme zur linienförmigen Teilumfassung des Profilumfangs, **dadurch gekennzeichnet, dass** die Vorrichtung aus einem Zylinderabschnitt (15) besteht, und die Aufnahme als eine in Umfangsrichtung des Zylinderabschnitts (15) verlaufende Rinne (19) ausgebildet ist, deren Breite sich von einem Ende zum anderen Ende des Zylinderabschnitts (15) in Anpassung an verschiedene Profilgrößen des gleichen Profils (5) konisch vergrößert, wobei der Zylinderabschnitt (15) um eine quer zur Rinne (19) angeordneten Schwenkachse (16) zur Einstellung auf die jeweils produzierte Profilgröße drehbar gelagert ist.

2. Vorrichtung nach Anspruch 1, **dadurch gekennzeichnet, dass** die Schwenkachse (16) auf der Mittelachse eines den Zylinderabschnitt (15) enthaltenden Vollzylinders liegt, und dass die Tiefe (t) der Rinne (19) vom Ende mit der kleinsten Weite bis zum Ende mit der größten Weite stetig zunimmt, um eine möglichst große, linienförmige Teilumfassung des Profilumfangs zu gewährleisten.

3. Vorrichtung nach Anspruch 2, **dadurch gekennzeichnet, dass** die Rinne (19) eine gleichbleibende Tiefe (t) aufweist, wobei die Schwenkachse (16) derart exzentrisch zur Mittelachse eines den Zylinderabschnitt (15) enthaltenden Vollzylinders angeordnet ist, dass eine linienförmige Teilumfassung des Umfangs jeder Profilgröße gewährleistet ist.

4. Vorrichtung nach einem der vorstehenden Ansprüche, **dadurch gekennzeichnet, dass** der Zylinderabschnitt (15), zumindest aber seine Kontaktfläche mit dem extrudierten Profil (5), aus einem Material mit guten Gleiteigenschaften, z. B. PTFE, besteht.

## Claims

1. Apparatus for supporting extruded plastic profiles, in particular pipes, in an extrusion line, having a holder which is adapted to the cross section of the profile for the linear partial enclosure of the profile circumference, **characterized in that** the apparatus comprises a cylinder portion (15), and the holder is formed as a channel (19) which runs in the circumferential direction of the cylinder portion (15) and the width of which increases conically from one end to the other of the cylinder portion (15) in adaptation to different profile sizes of the same profile (5), the cylinder portion (15) being mounted rotatably about a pivot axis (16), arranged transversely in relation to the channel (19), for setting to the profile size that is respectively produced.

2. Apparatus according to Claim 1, **characterized in that** the pivot axis (16) lies on the centre axis of a complete cylinder containing the cylinder portion (15), and **in that** the depth (t) of the channel (19) steadily increases from the end with the smallest width to the end with the greatest width, in order to ensure greatest possible linear partial enclosure of the profile circumference.

3. Apparatus according to Claim 2, **characterized in that** the channel (19) has a constant depth (t), the pivot axis (16) being arranged eccentrically in relation to the centre axis of a complete cylinder containing the cylinder portion (15) in such a way that a linear partial enclosure of the circumference of each profile size is ensured.

4. Apparatus according to one of the preceding claims, **characterized in that** the cylinder portion (15), or at least its area of contact with the extruded profile (5), consists of a material with good sliding properties, for example PTFE.

## Revendications

1. Dispositif pour supporter des profilés en matière plastique extrudés, notamment des tuyaux, dans une ligne d'extrusion avec un logement adapté à la section transversale du profilé pour la saisie partielle linéique de la périphérie du profilé, **caractérisé en ce que** le dispositif se compose d'une partie cylindrique (15), et le logement est formé par une goulotte (19) orientée dans la direction périphérique de la partie cylindrique (15), et dont la largeur augmente en forme de cône d'une extrémité à l'autre extrémité de la partie cylindrique (15) en s'adaptant à différentes grandeurs de profilé du même profilé (5), dans lequel la partie cylindrique (15) est montée en rotation autour d'un axe de pivotement (16) disposé transversalement à la goulotte (19) pour le réglage à la grandeur de profilé respectivement produite.

2. Dispositif selon la revendication 1, **caractérisé en ce que** l'axe de pivotement (16) est situé sur l'axe central d'un cylindre complet contenant la partie cylindrique (15), et **en ce que** la profondeur (t) de la goulotte (19) augmente en continu de l'extrémité ayant la plus petite largeur jusqu'à l'extrémité ayant la plus grande largeur, afin de garantir une saisie partielle linéique aussi grande que possible de la périphérie du profilé.

3. Dispositif selon la revendication 2, **caractérisé en ce que** la goulotte (19) présente une profondeur (t) constante, dans lequel l'axe de pivotement (16) est excentré par rapport à l'axe central d'un cylindre complet contenant la partie cylindrique (15), de telle manière qu'une saisie partielle linéique de la périphérie de chaque grandeur de profilé soit garantie.

4. Dispositif selon l'une quelconque des revendications précédentes, **caractérisé en ce que** la partie cylindrique (15), cependant au moins sa surface de contact avec le profilé extrudé (5), est constituée d'une matière présentant de bonnes propriétés de glissement, par exemple du PTFE.
